# EUROPEAN PATENT APPLICATION

(11) **EP 1 481 587 A1**
(43) Date of publication of application: **01.12.2004**
(21) Application number: 03705038.2
(22) Date of filing: 03.02.2003
(51) Int. Cl.: A01M 13/00

(54) **METHOD AND APPARATUS FOR FUMIGATION**

(30) Priority: 05.02.2002 JP 2002028467
(71) Applicant: Air Water Inc., Sapporo-shi, Hokkaido 060-0003 (JP); Kanto Kogyo Co., Ltd., Yokohama-shi, Kanagawa 231-0023 (JP)
(72) Inventor: YAMAMOTO, Kazuma, c/o Air Water Inc., Sakai Office, Sakai-shi, Osaka 592-8331 (JP); SHIBATA, Hitoshi, c/o Air Water Inc., Osaka-shi, Osaka 542-0083 (JP); SHIMIZU, Hiroshi, c/o Kanto Kogyo Co., Ltd., Yokohama-shi, Kanagawa 231-0023 (JP); YOSHIDA, Takao, c/o Kanto Kogyo Co., Ltd., Yokohama-shi, Kanagawa 231-0023 (JP); YAMAUCHI, Kazuo, c/o Kanto Kogyo Co., Ltd., Yokohama-shi, Kanagawa 231-0023 (JP); WAKAMATSU, Hironori, c/o Kanto Kogyo Co., Ltd., Yokohama-shi, Kanagawa 231-0023 (JP)
(74) Representative: Wakerley, Helen Rachael
(86) International application number: PCT/JP2003/001082
(87) International publication number: WO 2003/065800

(57) **Abstract**

A fumigating method for fumigating a large place such as a cultural facility with a compact installation and an apparatus used for the fumigating method. The fumigating method which comprises providing an argon gas tank (1) and a PO tank (8) filled with liquid propylene oxide, introducing an argon gas fed from the argon gas tank (1) and liquid propylene oxide fed from the PO tank (8) in advance to a gas-liquid mixer (5) for mixture, introducing the resultant gas-liquid mixture from the gas-liquidmixer (5) to a vaporizer (25) for vaporization, and then introducing the resultant gas mixture to a place (31) to be fumigated; and an apparatus for conducting such a method.

## Description

### TECHNICAL FIELD

The present invention relates to a fumigating method for preserving various cultural assets and to an apparatus used therefor.

### BACKGROUND ARTS

Heretofore, to protect a variety of valuable cultural assets (historical architecture such as temples and shrines, culturally highly-valued calligraphic works and paintings, books and craftworks), exhibition halls in cultural facilities such as museum, reference library and library, and other materials, places and the like, which require sterilization or insect killing, from harmful biological organisms such as harmful insects, molds and bacteria and to preserve them at good conditions, it has been generally conducted that such objects are enclosed air-tightly and a fumigation gas obtained by a fumigant, highly effective to sterilize harmful biological organisms, is filled in such a space for fumigation. This fumigating method has the advantage that harmful organisms can be eradicated at once without deteriorating qualities of cultural assets and the like.

As a fumigating agent for use in cultural assets and the like, a liquid mixture of ethylene oxide (pesticide) and methyl bromide (a diluent) has been mainly used. However, ethylene oxide is designated as a specific chemical substance due to its carcinogenicity so that its conditions for use are strictly restricted, while methyl bromide is designated as a substance that depletes the ozone layer in accordance with Montreal Protocol so that its use is also restricted. For this reason, the aforesaid fumigating agent is substantially impossible for use in the field of preservation of cultural assets.

As an alternative for the aforesaid fumigating agent, a gas mixture obtained by gas-liquid mixing propylene oxide (pesticide) and argon (a diluent) has been developed for use as a fumigating gas and has been proposed (see Japanese Unexamined Patent Publication No. JP2000-281506). Since propylene oxide (hereinafter just referred as "PO") has explosive limits of 2.8 to 37 % by volume in the air, a safe dispensing method is required so as to be outside a combustible range (or a range of inflammability), when PO evaporates, or in a place (space) to be fumigated including an inlet tube for introducing PO thereinto. Therefore, was developed a dispensing method for maintaining PO concentration of not more than 2 % by volume by adding argon for controlling the PO concentration so as to be outside the combustible range, and such a gas mixture has been used as a fumigating gas.

This method comprises blowing depressurized argon gas at a specific rate into a tank filled with liquid PO and warming the tank from outside by means of warm water of about 40°C for imparting latent heat required for evaporation (477J/kg) so as to control PO concentration. This method is just referred to "a bubbling method" hereinafter. The PO concentration of the gas mixture caused in the bubbling method is about 20 % by volume, and further argon gas is added thereto so as to dilute the resultant mixture within a range of 0.5 to 2.5 % by volume. For this reason, after a place to be fumigated is made into an argon gas atmosphere, the gas mixture caused in the bubbling method is introduced into the place from the tank and is mixed with argon gas for dilution in the place for homogenization.

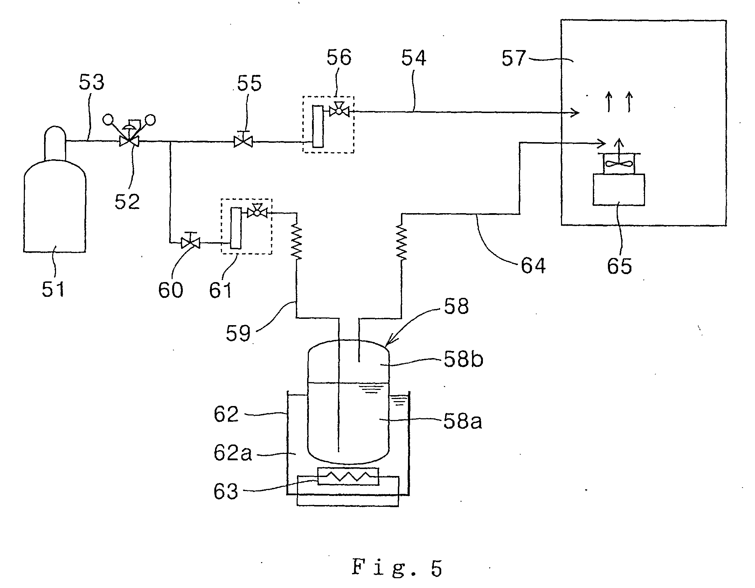

An example of a fumigating apparatus for using such technology is illustrated in Fig. 5. In Fig. 5, a reference numeral 51 denotes an argon gas tank filled with compressed argon gas. A reference numeral 52 denotes a decompression valve aligned on an argon-gas takeout tube 53 and reduces the pressure (14.7MPa) of the argon gas taken out of the argon gas tank 51 to a specific pressure (0.3MPa). A reference numeral 54 is a purge argon gas inlet tube for introducing the argon gas taken out of the argon-gas takeout tube 53 into a place 57 to be fumigated, and the purge argon gas inlet tube is provided with an on/off valve 55 and an argon gas flowmeter 56.

A reference numeral 58 denotes a PO tank, made of stainless steel, in which liquid PO is encapsulated, and comprises a lower liquid phase portion 58a comprising liquid PO and.an upper gas phase portion 58b. A reference numeral 59 is an inlet tube for introducing argon gas taken out of the argon gas takeout tube 53 as bubbling gas into the PO tank 58, and is provided with an on/off valve 60 and an argon gas flowmeter 61. The bubbling argon gas inlet tube 59 extends to the bottom inside the PO tank 58.

A reference numeral 62 denotes a warm water bath for storing warm water 62a into which the PO tank 58 is put. A reference numeral 63 is a heater for heating warm water 62a so that the temperature of the warm water 62a is within a range of 30 to 35°C. A reference numeral 64 is a gas mixture inlet tube for introducing gas mixture within the upper gas phase portion 58b of the PO tank 58 into a place 57 to be fumigated and extends from the upper portion of the PO tank 58 to the place 57. A reference numeral 65 is an apparatus for mixing the gas mixture introduced into the place 57.

A fumigating process is conducted, for example, by means of the aforesaid fumigating apparatus as follows. First, an on/off valve 55 is opened and an on/off valve 60 is closed, argon gas of the argon gas tank 51 is introduced via the argon gas takeout tube 53 and purge argon gas inlet tube 54 into the place 57 to be fumigated. As a result, the atmosphere of the place 57 is replaced with argon gas. Then, the on/off valve 55 is closed and the on/off valve 60 is opened, argon gas of the argon gas tank 51 is withdrawn through the argon gas takeout tube 53 and the bubbling argon gas inlet tube 59 into the lower liquid phase portion 58a of the PO tank 58, wherein the liquid PO is vaporized by the bubbling effect of the argon gas and the PO gas is stored in the upper gas phase portion 58b together with the argon gas.

The gas mixture of PO gas and an argon gas accumulated in the upper gas phase portion 58b of the PO tank 58, in which the PO gas concentration is kept constant, is supplied from the upper gas phase portion 58b of the PO tank 58 to the place 57 via the gas mixture inlet tube 64. At that time, the amount of the gas mixture and the like are adjusted such that the PO gas concentration in the place 57 is not more than 2 % by volume. Thus, harmful organisms in the place 57 are eradicated by fumigating the place 57 for a specific period and then the fumigating process is completed.

However, since the PO tank 58 per se is immersed into warm water 62a of the warm water bath 62 in the aforesaid bubbling method, the installation is enlarged. Further, to pass the latent heat required for evaporation from a surface of the PO tank 58, the maximum amount of dispensing the fumigating gas per minute is limited to 0.1kg/unit, because heat transfer area of the PO tank 58 is small. Since the amount of a fumigating agent for use in cultural facilities or the like is 50g/1m³ of dimensions and total PO amount is 100kg to 1500kg, many fumigating apparatus are required.

In view of the foregoing, it is an object of the present invention to provide a method for fumigating a large place such as a cultural facility with a compact apparatus and such an apparatus using the same method.

### DISCLOSURE OF THE INVENTION

In accordance with a first aspect of the present invention to achieve the aforesaid objects, there is provided a method for fumigation which comprises providing an inert gas supply source and a pressure container filled with liquid propylene oxide, introducing an inert gas fed from the inert gas supply source and liquid propylene oxide fed from the pressure container in advance to a gas-liquid mixer for mixture, introducing the resultant gas-liquid mixture from the gas-liquid mixer to a vaporizer for vaporization, and then introducing the resultant gas mixture to a place to be fumigated.

In accordance with a second aspect of the present invention to achieve the aforesaid objects, there is provided an apparatus for fumigation which comprises an inert gas supply source, a pressure container filled with liquid propylene oxide, a gas-liquid mixer for mixing in advance an inert gas fed from the inert gas supply source and liquid propylene oxide fed from the pressure container, a vaporizer for vaporizing the resultant gas-liquid mixture introduced from the gas-liquid mixer, and an inlet tube for introducing the resultant gas mixture vaporized by the vaporizer to a place to be fumigated.

According to the present invention, a method for fumigation which comprises providing an inert gas supply source and a.pressure container filled with liquid propylene oxide, introducing an inert gas fed from the inert gas supply source and liquid PO fed from the pressure container in advance to a gas-liquid mixer for mixture, introducing the resultant gas-liquid mixture from the gas-liquid mixer to a vaporizer for vaporization, and then introducing the resultant gas mixture to a place to be fumigated. In this manner, a fumigating method according to the present invention uses a gas-liquid mixer and a vaporizer. First, the inert gas fed from the inert gas supply source and the liquid PO fed from the pressure container are mixed in advance by means of a gas-liquid mixer, and the resultant gas-liquid mixture is vaporized by means of a vaporizer, and then the gas mixture is introduced into the place to be fumigated. Therefore, in the case of using the vaporizer according to the present invention, the installation becomes compact by downsizing the vaporizer, compared with the conventional bubbling method where the PO tank 58 is put into warm water 62a of the warm water bath 62. Further, compared with the conventional bubbling method where the PO tank 58 is heated by warm water 62a of the warm water bath 62, the amount of heat transmission is larger and the vaporizing speed is faster in the case of using the vaporizer, so that the dispensing time can be shortened and the dispensing amount can be increased. Therefore, a large place such as a cultural facility can be fumigated by the present method. Further, the fumigating method having the aforesaid beneficial effects can be effectively conducted by using the present apparatus.

When a remaining amount of the liquid PO is indicated by constantly measuring the pressure container filled with the liquid propylene oxide by a measuring means in the inventive method or in the inventive apparatus, the amount supplied and the remaining amount of the liquid PO in the pressure container can be found at once by measuring each weight of the pressure container before and after dosage, compared with the conventional bubbling method where the PO tank 58 is put into warm water 62a of the warm water bath 62, which means that the PO tank is fixed within the warm water bath during the dispensing process so that it is difficult to know the amount supplied and the remaining amount of the liquid PO in the conventional bubbling method.

When at least one part of a tube for transporting the gas-liquid mixture is installed in warm water heated by a heater in a warm water bath of the vaporizer so as to vaporize the gas-liquid mixture by warming with the warm water in the inventive method or in the inventive apparatus, a warm water amount of the warm water bath in the vaporizer could be increased, so that calorie is increased compared with the conventional bubbling method where the PO tank 58 is put into the warm water bath 62. For this reason, the vaporizing speed is faster in the inventive method or the inventive apparatus, time required for dosage could be shortened and the dosage amount could be drastically increased.

When the gas mixture is diluted by diluting means in the place to be fumigated according to the inventive method or the inventive apparatus, the PO gas concentration in the gas mixture could be diluted to the specific concentration by the diluting means arranged within the place to be fumigated.

When the propylene oxide gas is contained at a high concentration of 37 to 99 % by volume in the gas mixture obtained by the vaporizer so as to be outside a combustible range of the propylene oxide gas while the propylene oxide gas introduced at the high concentration into the diluting means is diluted to a low concentration of 0.5 to 2.5 % by volume in the gas mixture so as to be again outside a combustible range of the propylene oxide gas in the inventive method or in the inventive apparatus, the PO gas concentration is outside of the combustible range during vaporization in the vaporizer and through an inlet tube for introducing the PO gas from the vaporizer to the diluting means, which means safety. In the present invention, the PO gas concentration of the gas mixture (diluted gas) diluted by the diluting means is outside the combustible range, which is safe to be supplied to the place to be fumigated. Still further, when the PO gas concentration in the gas mixture is within a combustible range, the gas mixture exists within the diluting means. Therefore, if taking some measures so as not to take fire in the diluting means, safety could be secured within the diluting means. In the present invention, the PO gas concentration is within a high range of 37 to 99 % by volume in the gas mixture in the present invention, more preferably within a range of 55 to 65 % by volume. When the PO gas concentration is within a range of 55 to 65 % by volume, it is very safe because the combustible range of the gas mixture is narrow (or time required to pass the combustible range is shortened). When the PO gas concentration is below 55 % by volume or over 65 % by volume, the combustible range is wide, it is rather inferior in safety. When the combustible range is the narrowest (or time required to pass the combustible range is the shortest), the PO gas concentration is 60 % by volume, which is the safest.

When the inert gas is an argon gas in the inventive method or the inventive apparatus, there is the advantage that the argon gas may not damage dye, pigment or the like used for cultural assets, etc., differently from nitrogen or the like, because the argon gas is a complete inert gas. Further, since the argon gas has slightly an insecticidal action by itself, excellent insecticidal action and antiseptic effect can be obtained by combining the argon gas with the PO gas. Since the specific gravity of the argon gas is heavier than the air, the argon gas is mixed with the PO gas, lighter than the air, at a specific rate so that the resulting gas mixture becomes heavier than the air and prevails to the four corners of the place to be fumigated. The inert gas is not limited to the argon gas and various inert gases such as nitrogen gas may be used instead of the argon gas in the present invention. The inert gas in the present invention includes carbon dioxide gas and Freon HFC134a.

When including a gas-mixture inlet tube connected with the inlet tube, a fan, both provided within a case of the diluting means, a gas outlet formed on the gas-mixture inlet tube, a gas inlet provided within the case of the diluting means for introducing gas outside the diluting means into the diluting means with rotation of the fan for diluting the gas mixture which flows out of the gas outlet of the gas-mixture inlet tube; and a gas outlet, provided within the case of the diluting means, through which the diluted gas flows out, according to the inventive method or the inventive apparatus, the gas-mixture introduced into the case of diluting means through the inlet tube, the gas-mixture inlet tube and the gas outlet could be diluted by the gas outside the diluting means (that is, gas existing in the place to be fumigated). For this reason, the amount of the argon gas used could be greatly reduced compared with the conventional bubbling method where a large amount of the argon gas is used for diluting the PO gas. Further, when introducing the gas-mixture into an enclosed place 57 to be fumigated more than necessary, pressure is increased within the place, as in the conventional bubbling method, so that the gas may tend to leak in the case where sealing degree is low like in general cultural facilities. On the other hand, gas leak of the gas-mixture from the place to be fumigated could be reduced according to the inventive method or in the inventive apparatus because the amount of the argon gas used is reduced.

When the gas-liquid mixer is provided with a cylinder, an inert-gas inlet for introducing inert gas supplied from an inert-gas supply source is provided on a peripheral wall of the cylinder, a liquid-inlet tube for introducing liquid PO supplied from the pressure container into the cylinder penetrates the peripheral wall of the cylinder so as to pass into an inside of the cylinder and is aligned along a longitudinal direction of the inside, whereby the liquid PO which flows out of the liquid-inlet tube is mixed with the inert gas which flows out of the inert-gas inlet so that the gas and the liquid are mixed and made into a gas-liquid mixture in a mist state, the gas-liquid mixture in a mist state could be obtained by a simple apparatus.

When a lower liquid phase portion comprising liquid PO and an upper gas phase portion in an upper space of the liquid phase portion are provided within the pressure container, wherein the inert gas is supplied from the inert-gas supply source to the upper gas phase portion, the liquid PO could be pushed out by means of the pressure of the inert gas of the inert-gas supply source.

### BRIEF DESCRIPTION OF DRAWINGS

Fig. 1 is a block diagram of one embodiment illustrating a fumigating apparatus according to the present invention;
Fig. 2 is a cross sectional view partially illustrating a gas-liquid mixer of Fig. 1;
Fig. 3 is a cross sectional view illustrating a diluting means;
Fig. 4 is a block diagram illustrating a modification of a pressure adjusting means; and
Fig. 5 is a block diagram illustrating a conventional apparatus.

### BEST MODE FOR CARRYING OUT THE INVENTION

Embodiments of the present invention will next be described in detail.

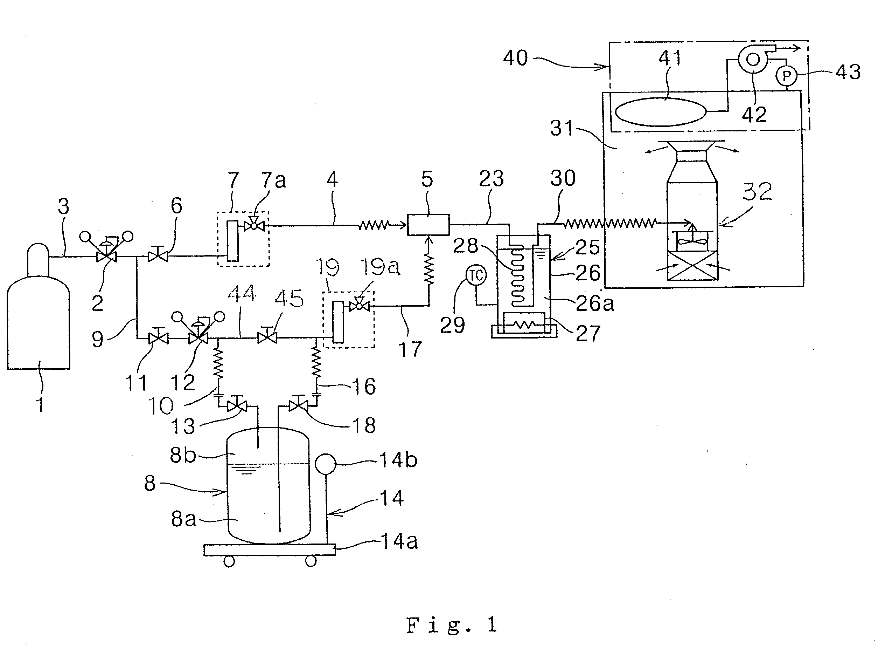

Fig. 1 illustrates one embodiment of a fumigating apparatus according to the present invention. In Fig. 1, a reference numeral 1 denotes an argon gas tank (an inert gas supply source) in which argon gas is filled in a pressurized state. A reference numeral 2 denotes a first decompression valve installed in an argon gas takeout tube 3 and the first decompression valve 2 depressurizes the pressure (14.7MPa in this embodiment) of the argon gas taken out of the argon gas tank 1 to a specific pressure (0.3MPa in this embodiment). A reference numeral 4 is an argon gas inlet tube for introducing the argon gas taken out of the argon gas takeout tube 3 into a gas-liquid mixer 5 and an on/off valve 6 is aligned upstream of the argon gas inlet tube while an argon gas flowmeter 7 (having an on/off valve 7a) for adjusting an argon gas flow to a constant rate (240L/min in this embodiment) is aligned downstream of the argon gas inlet tube.

A reference numeral 8 is a PO tank (pressure container) in which liquid PO is filled and a space inside the PO tank is separated into two parts of a lower liquid phase portion 8a comprising liquid PO and an upper gas phase portion 8b in an upper space of the lower liquid phase portion. Reference numerals 9, 10 denote a first and a second pressurizing argon gas inlet tubes, respectively, for introducing the argon gas taken out of the argon gas takeout tube 3 into the PO tank 8, wherein an on/off valve 11 is aligned upstream and a second decompression valve 12 is aligned downstream of the first pressurizing argon gas inlet tube 9, respectively. The second decompression valve 12 depressurizes the argon gas pressurized by the first decompression valve 2 further to a specific pressure (0.2MPa in this embodiment). The second pressurizing argon gas inlet tube 10 is provided with an on/off valve 13 and extends to the upper gas phase portion 8b of the PO tank 8. The inner pressure (the pressure of the upper gas phase portion 8b) of the PO tank 8 is kept at the same pressure as the specific pressure depressurized by the second decompression valve 12.

A reference numeral 14 denotes an electronic measuring means provided with a board 14a on which the PO tank 8 is placed for measuring the weight of the PO tank and an indicator 14b for indicating the resulting weight. When the amount supplied and the remaining amount of the liquid PO before / after dosage are needed, the weight of the liquid PO filled in the PO tank 8 (the amount supplied or the remaining amount) could be obtained by calculating the weight of the PO tank 8 placed on the board 14a.

Reference numerals 16, 17 denote a first liquid inlet tube and a second liquid inlet tube, respectively for introducing the liquid PO of the lower liquid phase portion 8a of the PO tank 8 into the gas-liquid mixer 5 and the first liquid inlet tube 16, having an on/off valve 18, extends from a bottom of the PO tank 8. The second liquid inlet tube 17 is provided with flowmeter 19 (having an on/off valve 19a) for adjusting the liquid PO flow to a constant rate (1L/min in this embodiment) .

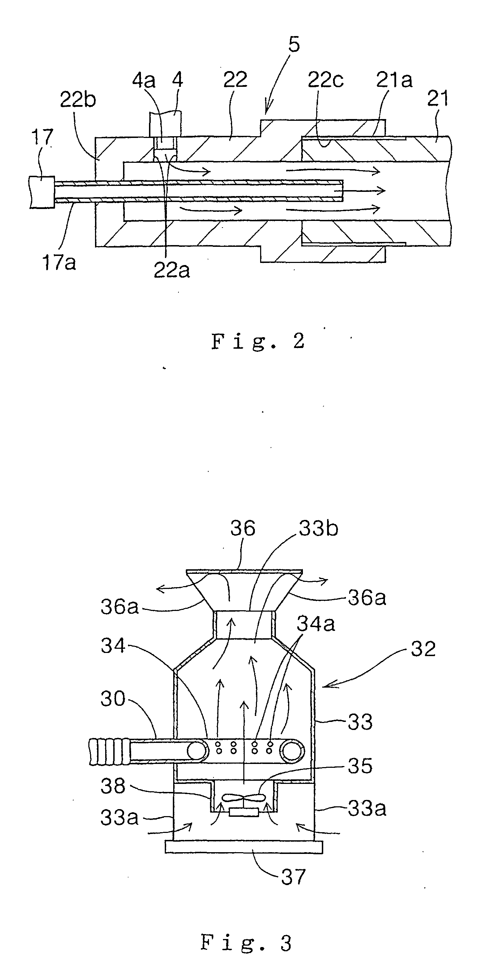

As shown in Fig. 2, the gas-liquid mixer 5 comprises a first cylinder 21 and a second cylinder 22 screwed on threaded portion 21a formed on an open end (a left open in Fig. 2) of the first cylinder 21, and the other end open (not shown) of the first cylinder 21 is connected with a mist transporting means 23 (see Fig. 1). An argon gas inlet 22a is formed on a peripheral wall of the second cylinder 22 and is provided with an open end of 4a of the argon gas inlet tube 4. An end portion 17a of the second liquid inlet tube 17 penetrates a left end wall 22b of the second cylinder 22 so as to enter the second cylinder 22 and extend longitudinally inside the second cylinder. The end portion 17a of the second liquid inlet tube 17 is opened upstream of the argon gas inlet 22a. The argon gas which flows out of the argon gas inlet 22a flows upstream along the end portion 17a within the second cylinder 22 (as shown by arrows in Fig. 2) and is mixed with the liquid PO which flows out of the end portion 17a. At that time, the argon gas has momentum stronger than the liquid PO due to the difference between pressures decompressed by the both decompression valves 2 and 12, whereby the liquid PO is made into a mist state by the argon gas and the gas-liquid mixture in a mist state is led out of the mist transporting means 23. In Fig. 2, a reference numeral 22c is a threaded portion of the second cylinder 22 corresponding to the threaded portion 21a of the first cylinder 21.

A reference numeral 25 is a vaporizer adopting an indirect warming method by means of warm water and for vaporizing the gas-liquid mixture in a state of mist led out of the mist transporting tube 23. The vaporizer 25 comprises a warm water bath 26 for storing warm water 26a, an electrical heater 27 for heating the warm water 26a, a tube (tube body) 28 for vaporization immersed in warm water 26a of the water bath 26, and a temperature controller 29, wherein the temperature of the warm water 26a is adjusted to about 80°C by means of the electrical heater 27. Since there is no necessity to control the PO concentration as in the conventional bubbling method, the temperature in the present invention could be higher than that of the conventional bubbling method. An open end of the tube 28 for vaporization is connected with the mist transporting tube 23, and the other end open thereof is connected with a gas mixture inlet tube 30 connected with a diluting means 32, below mentioned. The gas-liquid mixture in a mist state obtained by the gas-liquid mixer 5 is introduced into the tube 28 for vaporization through the mist transporting tube 23, wherein the gas-liquid mixture in a mist state is warmed by the warm water 26a during passage through the tube 28 for vaporization so as to be vaporized completely, and then be supplied to the gas mixture inlet tube 30.

A reference numeral 32 is a diluting means installed in a place (space) 31 to be fumigated. The diluting means 32 dilutes the gas mixture introduced through the gas mixture inlet tube 30. As shown in Fig. 3, the diluting means 32 includes a cylinder case 33, an annular tube (gas-mixture inlet tube) 34 provided within the cylinder case 33, and a blower fan 35 (air amount 70m³/min) provided below the annular tube 34 within the cylinder case 33 wherein the annular tube 34 is connected with the gas mixture inlet tube 30. Plural inlets 33a (only two inlets shown in Fig. 3) are made on a peripherally lower part of the cylinder case 33, and an upper open (gas outlet) 33b is covered by a roof 36 supported by a number of bars 36a (only two bars shown in Fig. 3). A number of gas outlets 34a are formed on the annular tube 34. In Fig. 3, a reference numeral 37 is a bottom plate for sealing the cylinder case 33 from beneath and a reference numeral 38 denotes a cylinder guide for guiding gas taken through gas inlets 33a into a near side to the blower fan 35. The gas is taken from outside cylinder case 33 into the cylinder case 33 via the gas inlets 33a, and is moved upward with rotation of the blower fan 35, and the gas mixture which flows out of the gas outlet 34a of the annular tube 34 is diluted with the gas taken into the cylinder case 33, and then the diluted gas flows out of the upper open 33b so as to encounter the roof 36 and be sent out to the place 31 to be fumigated.

A reference numeral 40 denotes a pressure adjusting means for maintaining pressure of the place 31 to be fumigated at a specific pressure (normal pressure in this embodiment). The pressure adjusting means 40 includes an air bag 41 expanded by air filled therein, an exhaust fan 42 (an exhaust velocity of 1m³/min) for exhausting air within the air bag 41 to the outside of the place 31 to be fumigated, and a micromanometer 43 for controlling operation of the exhaust fan 42 according to the detected pressure of the place 31. When the pressure of the place 31 increases along with introduction of the gas mixture, the air is gradually released from the air bag 41 with operation of the exhaust fan 42 so that the pressure in the place may not be increased to the pressure over the specific pressure. For this reason, the substantial volume of the place 31 to be fumigated is reduced and the pressure in the place is lowered so as to be adjusted within the specific pressure. When the pressure in the place 31 becomes the specific pressure, the micromanometer 43 detects the pressure so as to stop the operation of the exhaust fan 42 and also stop air release from the air bag 41. In Fig. 1, a reference numeral 44 denotes a connecting tube provided with an on/off valve 45. The connecting tube 44 supplies the argon gas of the argon tank 1 to the second liquid inlet tube 17, the gas-liquid mixer 5, the mist transporting tube 23, the tube 28 for vaporization of the vaporizer 25 and the inlet tube 30 for cleaning of them after a fumigating treatment. The connecting tube 44 connects the first pressurizing argon gas inlet tube 9 and the second liquid inlet tube 17.

A fumigating process can be conducted using the above apparatus, for example, as follows. The on/off valves 6, 7a are opened so that the argon gas of the argon gas tank 1 is introduced into the gas-liquid mixer 5 through the argon gas takeout tube 3 and the argon gas inlet tube 4. At that time, the flow rate of the argon gas is adjusted to a constant rate by means of the argon gas flowmeter 7 in the argon gas inlet tube 4. The on/off valves 11, 13 and 18 are opened and the on/off valve 45 is closed so that the argon gas of the argon gas tank 1 is introduced into the upper gas phase portion 8b of the PO tank 8 through the argon gas takeout tube 3 and both of the pressurizing argon gas inlet tubes 9, 10, whereby the liquid PO in the lower liquid phase portion 8a of the PO tank 8 is introduced into the liquid PO flowmeter 19 through the first liquid inlet tube 16. Then, the on/off valve 19a is opened so that the liquid PO is introduced into the gas-liquid mixer 5 with adjusting the flow rate to a constant rate by the liquid PO flowmeter 19. In the gas-liquid mixer 5, the argon gas and the liquid PO are made into a gas-liquid mixture in a mist state and led out of the mist transporting tube 23. The gas-liquid mixture in a mist state is introduced into the tube 28 for vaporization of the vaporizer 25 so as to be vaporized completely during passage through the tube 28 for vaporization by the warm water 26a. In this embodiment, the PO gas concentration of the gas mixture obtained by vaporization by means of the vaporizer 25 is adjusted to 60 % by volume and the argon gas concentration is adjusted to 40 % by volume. Further, the flow rate of the gas mixture is adjusted to 584L/min. The gas mixture is led out to the diluting means 32 through the gas mixture inlet tube 30. The gas mixture in the diluting means 32 is diluted to the degree that the PO gas concentration is 0.5 to 2.5 % by volume and sent to the outside of the diluting means 32. In this manner, a fumigating process is conducted for a specific time in the place 31 to be fumigated for killing the harmful organisms within the place 31 and then the fumigating process is completed. In this embodiment, the ratio of the PO gas and the argon gas is 6:4, whereby the amount for use of the argon gas is drastically reduced compared with the conventional bubbling method (PO gas : argon gas = 2.5 : 97.5).

Since the gas-liquid mixer 5 and the vaporizer 25 are used for obtaining the gas mixture of the PO gas and the argon gas in this embodiment, as mentioned above, the installation can be compact. Further, the amount of heat transmission of vaporization heat is large and the vaporizing speed is fast in the vaporizer 25, so that the dispensing amount can be increased. Therefore, a large place such as a cultural facility can be fumigated by the present method. Still further, since the PO gas concentration of the gas mixture obtained by means of the vaporizer 25 is adjusted to a high concentration of 60 % by volume and the PO gas of the gas mixture is diluted to a low concentration of 0.5 to 2.5 % by volume in the diluting means 32, each of the PO gas concentrations of the gas mixture is outside of the combustible range during vaporization in the vaporizer 25 and in the inlet tube 30, which means safety therein. Also it is safe in the diluting means 32. Even still further, the gas-liquid mixer 5 has a simple structure. Further, since the liquid PO of the PO tank 8 is introduced into the gas-liquid mixer 5 by means of the argon gas in the argon tank 1, the installation can be simplified.

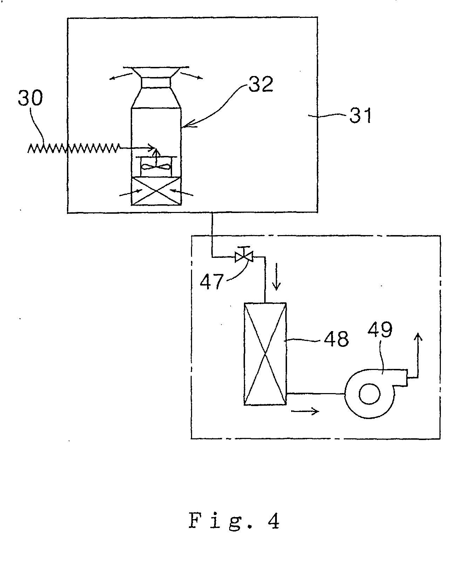

Fig. 4 illustrates a modification of a pressure adjusting means for use in the fumigating apparatus according to the present invention. In this embodiment, the pressure adjusting means is for maintaining the pressure of the place 31 to be fumigated at a specific pressure (normal pressure in this embodiment) by exhausting the gas of the place 31 to the outside. The pressure adjusting means includes an on/off valve 47, a filter 48, an exhaust fan 49 and a micromanometer (not shown) for controlling operation of the on/off valve 47 and the exhaust fan 49 by detecting the pressure of the place 31. When the pressure of the place 31 increases along with introduction of the gas mixture in this embodiment, the on/off valve 47 is opened so as not to increase the pressure beyond the specific pressure and the air is gradually released to the outside from the place 31 with operation of the exhaust fan 49 so that the pressure in the place 31 is adjusted to the specific pressure. When the pressure in the place 31 becomes the specific pressure, the micromanometer detects the pressure so as to close the on/off valve 47 and stop the operation of the exhaust fan 49 and also stop air release from the place 31.

In the above embodiment, the argon gas tank 1 in which argon gas is filled at high pressure is used as an argon gas supply source, which, however, is not limited thereto. A liquefied gas container (LGC) filled with liquid argon may be used by being connected with a vaporizer for vaporizing the liquid argon for use.

The argon gas of the argon gas tank 1 is introduced into the upper gas phase portion 8b of the PO tank 8 in the above embodiment. However, any containers other than the argon gas tank 1 may be used for introducing the argon gas into the upper gas phase portion 8b of the PO tank 8, or any gas other than argon gas may be used. Further, any other means may be used only if it is possible to send out the liquid PO of the lower liquid phase portion 8a of the liquid PO tank 8 into the first liquid inlet tube 16.

A gas-exhausting process after the fumigating process may be conducted by combining the conventional vacuum cleaning method (VCM) or a catalytic exhaust gas treatment equipment (VOC-ABATER: Volatile Organic Chemicals Abater) with the fumigating apparatus as shown in Fig. 1.

### INDUSTRIAL APPLICABILITY

In the case of using the vaporizer according to the present invention, the installation becomes compact by downsizing the vaporizer, compared with the conventional bubbling method where the PO tank 58 is put into warm water 62a of the warm water bath 62. Further, compared with the conventional bubbling method where the PO tank 58 is heated by warm water 62a of the warm water bath 62, the amount of heat transmission is larger and the vaporizing speed is faster in the case of using the vaporizer, so that the dispensing time can be shortened and the dispensing amount can be increased. Therefore, a large place such as a cultural facility can be fumigated by the present method. Further, the fumigating method having the aforesaid beneficial effects can be effectively conducted by using the present apparatus.

When a remaining amount of the liquid PO is indicated by constantly measuring the pressure container filled with the liquid propylene oxide by a measuring means in the inventive method or in the inventive apparatus, the amount supplied and the remaining amount of the liquid PO in the pressure container can be found by measuring each weight of the pressure container before and after dosage, compared with the conventional bubbling method where the PO tank 58 is put into warm water 62a of the warm water bath 62, which means that the PO tank is fixed within the warm water bath during the dispensing process, so that it is difficult to know the amount supplied and the remaining amount of the liquid PO in the conventional bubbling method.

When at least one part of a tube for transporting the gas-liquid mixture is installed in warm water heated by a heater in a warm water bath of the vaporizer so as to vaporize the gas-liquid mixture by warming with the warm water in the inventive method or in the inventive apparatus, a warm water amount of the warm water bath in the vaporizer could be increased, so that calorie is increased compared with the conventional bubbling method where the PO tank 58 is put into the warm water bath 62. For this reason, the vaporizing speed is faster in the inventive method or the inventive apparatus, time required for dosage could be shortened and the dosage amount could be drastically increased.

When the gas mixture introduced is diluted by diluting means in the place to be fumigated according to the inventive method or the inventive apparatus, the PO gas concentration in the gas mixture could be diluted to the specific concentration by the diluting means arranged within the place to be fumigated.

When the propylene oxide gas is contained at a high concentration of 37 to 99 % by volume in the gas mixture obtained by the vaporizer so as to be outside a combustible range of the propylene oxide gas while the propylene oxide gas introduced at the high concentration into the diluting means is diluted to a low concentration of 0.5 to 2.5 % by volume in the gas mixture so as to be again outside a combustible range of the propylene oxide gas in the inventive method or in the inventive apparatus, the PO gas concentration is outside of the combustible range during vaporization in the vaporizer and through an inlet tube for introducing the PO gas from the vaporizer to the diluting means, which means safety. In the present invention, the PO gas concentration of the gas mixture (diluted gas) diluted by the diluting means is outside the combustible range, which is safe to be supplied to the place to be fumigated. Still further, when the PO gas concentration in the gas mixture is within a combustible range, the gas mixture exists within the diluting means. Therefore, if taking some measures so as not to take fire in the diluting means, safety could be secured within the diluting means. In the present'invention, the PO gas concentration is within a high range of 37 to 99 % by volume in the gas mixture in the present invention, more preferably within a range of 55 to 65 % by volume. When the PO gas concentration is within a range of 55 to 65 % by volume, it is very safe because the combustible range of the gas mixture is narrow (or time required to pass the combustible range is shortened). When the PO gas concentration is below 55 % by volume or over 65 % by volume, the combustible range is wide, it is rather inferior in safety. When the combustible range is the narrowest (or time required to pass the combustible range is the shortest), the PO gas concentration is 60 % by volume, which is the safest.

When the inert gas is an argon gas in the inventive method or the inventive apparatus, there is the advantage that the argon gas may not damage dye, pigment or the like used for cultural assets, etc., differently from nitrogen or the like, because the argon gas is a complete inert gas. Further, since the argon gas has slightly an insecticidal action by itself, excellent insecticidal action and antiseptic effect can be obtained by combining the argon gas with the PO gas. Since the specific gravity of the argon gas is heavier than the air, the argon gas is mixed with the PO gas, lighter than the air, at a specific rate so that the resulting gas mixture becomes heavier than the air and prevails to the four corners of the place to be fumigated.

When including a gas-mixture inlet tube connected with the inlet tube, a fan, both provided within a case of the diluting means, a gas outlet formed on the gas-mixture inlet tube, a gas inlet provided within the case of the diluting means for introducing gas outside the diluting means into the diluting means with rotation of the fan for diluting the gas mixture which flows out of the gas outlet of the gas-mixture inlet tube with the gas introduced; and a gas outlet, provided within the case of the diluting means, through which the diluted gas flows out, according to the inventive method or the inventive apparatus, the gas-mixture introduced through the inlet tube, the gas-mixture inlet tube and the gas outlet could be diluted by the gas outside the diluting means (that is, gas existing in the place to be fumigated) . For this reason, the amount of the argon gas used could be greatly reduced compared with the conventional bubbling method where a large amount of the argon gas is used for dilution. Further, when introducing the gas-mixture into an enclosed place 57 to be fumigated more than necessary, pressure is increased within the place 57, as in the conventional bubbling method, so that the gas may tend to leak in the case where sealing degree is low like in general cultural facilities. On the other hand, gas leak of the gas-mixture from the place to be fumigated could be reduced according to the inventive method or in the inventive apparatus because the amount of the argon gas used is reduced.

When the gas-liquid mixer is provided with a cylinder, an inert-gas inlet for introducing inert gas supplied from an inert-gas supply source is provided on a peripheral wall of the cylinder, a liquid-inlet tube for introducing liquid PO supplied from the pressure container into the cylinder penetrates the peripheral wall of the cylinder so as to pass into an inside of the cylinder and is aligned along a longitudinal direction of the inside, whereby the liquid PO which flows out of the liquid-inlet tube is mixed with the inert gas which flows out of the inert-gas inlet so that the gas and the liquid are mixed and made into a gas-liquid mixture in a mist state, the gas-liquid mixture in a mist state could be obtained by a simple apparatus.

When a lower liquid phase portion comprising liquid PO and an upper gas phase portion in an upper space of the liquid phase portion are provided within the pressure container, wherein the inert gas is supplied from the inert-gas supply source to the upper gas phase portion, the liquid PO could be pushed out to the outside of the pressure container by means of the pressure of the inert gas of the inert-gas supply source.

## Claims

1. A method for fumigation which comprises providing an inert gas supply source and a pressure container filled with liquid propylene oxide, introducing an inert gas fed from the inert gas supply source and liquid propylene oxide fed from the pressure container in advance to a gas-liquid mixer for mixture, introducing the resultant gas-liquid mixture from the gas-liquid mixer to a vaporizer for vaporization, and then introducing the resultant gas mixture to a place to be fumigated.

2. A method as set forth in claim 1, wherein a remaining amount of the liquid propylene oxide is indicated byconstantlymeasuringthepressure container filled with the liquid propylene oxide by a measuring means.

3. A method as set forth in claim 1 or 2, wherein at least one part of a tube for transporting the gas-liquid mixture is installed in warm water heated by a heater in a warm water bath of the vaporizer so as to vaporize the gas-liquid mixture by warming with the warm water.

4. A method as set forth in any of claim 1 to claim 3, wherein the gas mixture is diluted by diluting means in the place to be fumigated.

5. A method as set forth in claim 4, wherein the propylene oxide gas is contained at a high concentration of 33 to 99 % by volume in the gas mixture obtained by the vaporizer so as to be outside a combustible range of the propylene oxide gas while the propylene oxide gas introduced at the high concentration into the diluting means is diluted to a low concentration of 0.5 to 2.5 % by volume in the gas mixture so as to be again outside a combustible range of the propylene oxide gas.

6. A method as set forth in any of claim 1 to claim 5, wherein the inert gas is an argon gas.

7. An apparatus for fumigation which comprises an inert gas supply source, a pressure container filled with liquid propylene oxide, a gas-liquid mixer for mixing in advance an inert gas fed from the inert gas supply source and liquid propylene oxide fed from the pressure container, a vaporizer for vaporizing the resultant gas-liquid mixture introduced from the gas-liquid mixer, and an inlet tube for introducing the resultant gas mixture vaporized by the vaporizer to a place to be fumigated.

8. An apparatus as set forth in claim 7, wherein a measuring means is provided for constantly measuring the pressure container filled with the liquid propylene oxide so as to obtain a remaining amount of the liquid propylene oxide.

9. An apparatus as set forth in claim 7 or claim 8, wherein the vaporizer comprises a warm water bath for storing warm water, a heater for heating the warm water and a tube for transporting the gas-liquid mixture, at least one part of the tube being installed in the warm water.

10. An apparatus as set forth in any of claim 7 to claim 9, wherein diluting means is installed for diluting the gas mixture introduced through the inlet tube into the place to be fumigated.

11. An apparatus as set forth in claim 10, wherein the propylene oxide gas is contained at a high concentration of 33 to 99 % by volume in the gas mixture obtained by the vaporizer while the propylene oxide gas introduced through the inlet tube into the diluting means is diluted to a low concentration of 0.5 to 2.5 % by volume in the gas mixture.

12. An apparatus as set forth in claim 10 or claim 11, including a gas-mixture inlet tube connected with the inlet tube, a fan, both provided within a case of the diluting means, a gas outlet formed on the gas-mixture inlet tube, a gas inlet provided within the case of the diluting means for introducing gas outside the diluting means into the diluting means with rotation of the fan for diluting the gas mixture which flows out of the gas outlet of the gas-mixture inlet tube with the gas introduced; and a gas outlet, provided within the case of the diluting means, through which the diluted gas flows out.

13. An apparatus as set forth in any of claim 7 to claim 12, wherein the gas-liquid mixer is provided with a cylinder, an inert-gas inlet for introducing inert gas supplied from an inert-gas supply source is provided on a peripheral wall of the cylinder, a liquid-inlet tube for introducing liquid propylene oxide supplied from the pressure container into the cylinder penetrates the peripheral wall of the cylinder so as to pass into an inside of the cylinder and is aligned along a longitudinal direction of the inside, whereby the liquid propylene oxide flowing out of the liquid-inlet tube is mixed with the inert gas flowing out of the liquid-inlet tube so that the gas and the liquid are mixed and made into a gas-liquid mixture in a mist state.

14. An apparatus as set forth in any of claim 7 to claim 13, wherein a lower liquid phase portion comprising liquid propylene oxide and an upper gas phase portion in an upper space of the liquid phase portion are provided within the pressure container, and the inert gas is supplied from the inert-gas supply source to the upper gas phase portion.

15. An apparatus as set forth in any of claim 7 to 14, wherein the inert gas is an argon gas.
